# EUROPÄISCHE PATENTANMELDUNG

(11) **EP 4 621 255 A1**
(43) Veröffentlichungstag der Anmeldung: **24.09.2025**
(21) Anmeldenummer: 25165415.8
(22) Anmeldetag: 21.03.2025
(51) Int. Cl.: F16D 1/06, F16D 3/78, F16H 49/00, G01L 3/00

(54) **DREHMOMENTÜBERTRAGUNGSBAUTEIL FÜR EIN GETRIEBE**

(30) Priorität: 21.03.2024 LU 506644
(71) Anmelder: Ovalo GmbH, 65555 Limburg (DE)
(72) Erfinder: Yilmaz, Anil-Cem, 35641 Aßlar (DE)
(74) Vertreter: Hoffmann, Jürgen

(57) **Zusammenfassung**

Die Erfindung betrifft ein Drehmomentübertragungsbauteil für ein Getriebe, zum drehmomentübertragenden Verbinden eines ersten Getriebebauteilelements des Getriebes mit einem zweiten Getriebebauteilelement des Getriebes, wobei das Drehmomentübertragungsbauteil ringförmig oder ringsegmentförmig ausgebildet ist und mehrere in Umfangsrichtung angeordnete und voneinander beabstandete Befestigungsblöcke aufweist, und wobei jeweils unmittelbar benachbarte Befestigungsblöcke mittels jeweils eines Verbindungsstegs miteinander verbunden sind. Das Drehmomentübertragungsbauteil zeichnet sich dadurch aus, dass an wenigstens einem der Verbindungstege (5) wenigstens ein Verformungsmesssensor, insbesondere ein Dehnungsmessstreifen, befestigt ist

## Beschreibung

Die Erfindung betrifft ein Drehmomentübertragungsbauteil für ein Getriebe, zum drehmomentübertragenden Verbinden eines ersten Getriebebauteilelements des Getriebes mit einem zweiten Getriebebauteilelement des Getriebes, wobei das Drehmomentübertragungsbauteil ringförmig oder ringsegmentförmig ausgebildet ist und mehrere in Umfangsrichtung angeordnete und voneinander beabstandete Befestigungsblöcke aufweist, und wobei jeweils unmittelbar benachbarte Befestigungsblöcke mittels jeweils eines Verbindungsstegs miteinander verbunden sind.

Aus DE 10 2022 108 016 A1 ist ein Getriebesystem bekannt, das ein Drehmomentabstützelement und ein Dreiwellengetriebe mit wenigstens einem, insbesondere ringförmigen, Zahnrad aufweist. Das Getriebesystem zeichnet sich dadurch aus, dass das Zahnrad als Flansch ausgebildet ist oder einen Flansch aufweist und dass das Zahnrad mittels eines elastisch verformbaren Koppelbauteils, das einen mit dem Flansch drehfest verbundenen Gegenflansch aufweist, an dem Drehmomentabstützelement festgelegt ist.

Aus WO 2010 142318 A1 ist eine Vorrichtung zur Messung des Drehmoments, das auf eine Abtriebswelle eines Spannungswellengetriebes übertragen wird, bekannt. Die Vorrichtung weist ein Gehäuse, einen in dem Gehäuse montierten Circularspline und einen an die Abtriebswelle montierten Flexspline auf. Die Vorrichtung umfasst außerdem Sensoren, die zur Messung von Kräften zwischen dem Circularspline und dem Gehäuse angeordnet sind, sowie eine Recheneinheit, die Messsignale von den Sensoren empfängt und auf dieser Grundlage das übertragene Drehmoment berechnet.

Aus der deutschen Offenlegungsschrift DE 10 2022 108 016 A1 ist ein Getriebesystem bekannt, das ein Drehmomentabstützelement und ein Dreiwellengetriebe mit einem ringförmigen Zahnrad aufweist. Das Getriebesystem zeichnet sich dadurch aus, dass das Zahnrad als Flansch ausgebildet ist oder einen Flansch aufweist und dass das Zahnrad mittels eines elastisch verformbaren Koppelbauteils, das einen mit dem Flansch drehfest verbundenen Gegenflansch aufweist, an dem Drehmomentabstützelement festgelegt ist.

Es ist die Aufgabe der vorliegenden Erfindung, ein Drehmomentübertragungsbauteil anzugeben, das besonders kompakt ist und für eine präzise Drehmomentmessung ausgebildet werden kann.

Die Aufgabe wird durch ein Drehmomentübertragungsbauteil gelöst, das dadurch gekennzeichnet ist, dass an wenigstens einem der Verbindungstege wenigstens ein Verformungsmesssensor, insbesondere ein Dehnungsmessstreifen, befestigt ist.

Das erfindungsgemäße Drehmomentübertragungsbauteil hat den ganz besonderen Vorteil, dass es sowohl in Axialrichtung als auch in Radialrichtung besonders kompakt und bauraumsparend ausgebildet werden kann und dennoch in der Lage ist, vergleichsweise hohe Drehmomente zu übertragen. Da die Verbindungsstege des erfindungsgemäßen Drehmomentübertragungsbauteils vorwiegend, vorzugsweise ausschließlich, auf Zug oder auf Druck belastet werden, können gegenüber einem Drehmomentübertragungsbauteil, das radial ausgerichtete Biegestege aufweist, die die gleiche Querschnittsfläche und die gleiche Länge aufweisen, wie die Verbindungsstege des erfindungsgemäßen Drehmomentübertragungsbauteils, sehr viel höhere Drehmomente übertragen werden.

Die Erfindung hat außerdem den ganz besonderen Vorteil, dass innerhalb eines mit dem erfindungsgemäßen Drehmomentübertragungsbauteil ausgerüsteten Getriebes eine elastische Ausgleichsmöglichkeit geschaffen ist, die das Getriebe vor einer Beschädigung im Überlastfall schützt. Hierzu sind die Verbindungsstege elastisch verformbar ausgebildet.

Das erfindungsgemäße Drehmomentübertragungsbauteil kann zur Drehmomentübertragung mit beliebigen Wellen befestigt werden. Der besseren Lesbarkeit wegen wird das Drehmomentübertragungsbauteil im Folgenden ohne Beschränkung des Umfangs der Erfindung und des Schutzbereichs lediglich im Hinblick auf eine Drehmomentübertragung von einem ersten Getriebebauteilelement auf ein zweites Getriebebauteilelement beschrieben.

Insbesondere kann vorteilhaft vorgesehen sein, dass der wenigstens eine Verformungsmesssensor dazu ausgebildet und angeordnet ist, insbesondere unmittelbar, eine in Umfangsrichtung auf den Verbindungssteg wirkende Kraft zu messen.

Vorzugsweise weist jeder Befestigungsblock wenigstens ein Befestigungsmittel auf, um den Befestigungsblock an einem Getriebebauteilelement, vorzugsweise zerstörungsfrei wieder lösbar, befestigen zu können. Beispielsweise kann das Befestigungsmittel eine, insbesondere in Axialrichtung verlaufende, Durchgangsbohrung für eine Befestigungsschraube oder für einen Steckbolzen sein. Alternativ kann das Befestigungsmittel eine, insbesondere in Axialrichtung verlaufende, Gewindebohrung sein, in die eine Befestigungsschraube eingeschraubt werden kann. Das Befestigungsmittel kann auch als Steckelement ausgebildet sein, um mit einem Gegensteckelement eines Getriebebauteilelements eine Steckverbindung herstellen zu können. Auch andere Ausführungen des Befestigungsmittels zum kraft-, form- und/oder stoffschlüssigen Befestigen des Befestigungsblocks an einem Getriebebauteilelement sind ohne grundsätzliche Beschränkungen möglich.

Bei einer ganz besonders vorteilhaften Ausführung beinhalten die Befestigungsblöcke erste Befestigungsblöcke, die dazu ausgebildet sind, an einem ersten Getriebebauteilelement eines Getriebes befestigt zu werden, und zweite Befestigungsblöcke, die dazu ausgebildet sind, an dem zweiten Getriebebauteilelement eines Getriebes befestigt zu werden.

Insbesondere kann jeder Befestigungsblock eine ebene Anlagefläche aufweisen, die vorzugsweise dazu ausgebildet und angeordnet ist, an einer Gegenanlagefläche eines Getriebebauteilelements anzuliegen. Bei einer ganz besonders bauraumsparenden Ausführung sind die Anlageflächen der ersten Befestigungsblöcke in einer gemeinsamen ersten Ebene angeordnet, während die Anlageflächen der zweiten Befestigungsblöcke in einer gemeinsamen zweiten Ebene angeordnet sind, die von der ersten Ebene axial beabstandet ist. Dies kann beispielsweise dadurch erreicht werden, dass die ersten und zweiten Befestigungsblöcke axial versetzt zueinander angeordnet sind, wobei vorzugsweise die Flächennormalen der Anlageflächen der ersten Befestigungsblöcke axial entgegengesetzt zu den Flächennormalen der Anlageflächen der zweiten Befestigungsblöcke ausgerichtet sind.

Bei einer besonderen Ausführung sind die ersten und zweiten Befestigungsblöcke entlang der Umfangsrichtung abwechselnd angeordnet. Insbesondere hierbei können die ersten und zweiten Befestigungsblöcke, abgesehen von einer unterschiedlichen Anordnung und/oder Ausrichtung, gleich ausgebildet sein.

Ganz allgemein können alle Befestigungsblöcke vorteilhaft, abgesehen von einer unterschiedlichen Anordnung und/oder Ausrichtung, gleich ausgebildet sein. Insbesondere können alle Befestigungsblöcke die gleiche Form und/oder die gleiche Größe aufweisen.

Wie bereits erwähnt, können die ersten und zweiten Befestigungsblöcke axial versetzt zueinander angeordnet sein. Dies ermöglicht es, die ersten Befestigungsblöcke an dem ersten Getriebebauteilelement zu befestigen, ohne dass die ersten Befestigungsblöcke mit dem zweiten Getriebebauteilelement in Kontakt kommen, und ermöglicht es außerdem, die zweiten Befestigungsblöcke an dem zweiten Getriebebauteilelement zu befestigen, ohne dass die zweiten Befestigungsblöcke in mit dem ersten Getriebebauteilelement in Kontakt kommen. Auf diese Weise wird insbesondere vermieden, dass die ersten Befestigungsblöcke an dem zweiten Getriebebauteilelement und die zweiten Befestigungsblöcke an dem ersten Getriebebauteilelement bei einer Veränderung des zu übertragenden Drehmomentes schleifen, was insbesondere zu einer Verfälschung einer Drehmomentmessung führen könnte.

Vorzugsweise sind die Befestigungsblöcke und die Verbindungsstege gemeinsam einstückig hergestellt. Das Drehmomentübertragungsbauteil kann vorteilhaft insbesondere aus Stahl oder aus Aluminium oder aus einer Aluminiumlegierung oder aus Titan hergestellt sein. Hinsichtlich des Materials gibt es jedoch keine grundsätzlichen Beschränkungen.

Vorzugsweise sind die Verbindungsstege gleich ausgebildet.

Bei einer vorteilhaften Ausführung ist jeder Verbindungsteg als Stab oder als Ringsegment ausgebildet.

Insbesondere im Hinblick auf eine präzise Drehmomentmessung kann jeder Verbindungssteg in Umfangsrichtung vorteilhaft eine Länge aufweisen, die größer ist als seine radiale Dicke und/oder seine axiale Dicke.

Wie bereits erwähnt kann vorteilhaft vorgesehen sein, dass an wenigstens einem der Verbindungstege wenigstens ein Verformungsmesssensor, insbesondere ein Dehnungsmessstreifen, befestigt ist. Der Verformungsmesssensor ermöglicht es, eine von der jeweils einwirkenden Kraft abhängige Verformung, insbesondere Längung oder Stauchung, des jeweiligen Verbindungstegs zu erfassen. Es können alternativ oderzusätzlich zu einem Dehnungsmessstreifen auch andere Messmittel, beispielsweise ein piezobasierter Längenmesssensor, zum Erfassen der Verformung des Verbinders, vorhanden sein. Vorzugsweise sind an mehreren, insbesondere allen, Verbindungsstegen jeweils wenigstens ein Dehnungsmessstreifen angebracht, um die Verformung unter Drehmomenteinwirkung zu messen.

Bei einer ganz besonders vorteilhaften Ausführung sind die Verbindungsstege derart ausgebildet und relativ zu den Befestigungsblöcken derart angeordnet, dass jeweils von zwei Verbindungsstegen, die mit einem der Befestigungsblöcke unmittelbar verbunden sind, einer ausschließlich auf Zug und der andere ausschließlich auf Druck belastet wird. Eine solche Ausführung ist deshalb besonders vorteilhaft, weil der auf Druck belastete Verbindungssteg um denselben Betrag gestaucht wird, wie der gleichzeitig auf Zug belastete Verbindungssteg gelängt wird, wodurch beispielsweise bei einer Drehmomentmessung Störeinflüsse kompensiert werden.

Ganz allgemein hat das erfindungsgemäße Drehmomentübertragungsbauteil den ganz besonderen Vorteil, dass die Verbindungsstege wie mechanisch parallel geschaltete (Zug- und Druck-) Federn wirken, was eine sehr präzise Messung des mittels des Drehmomentübertragungsbauteils übertragenen Drehmomentes erlaubt, wenn an benachbarten Verbindungsstegen jeweils wenigstens ein Verformungsmesssensor, insbesondere Dehnungsmessstreifen, angebracht ist, um die Verformung der Verbindungsstege (Längung des einen Verbindungsstegs und Stauchung des anderen Verbindungsstegs) unter Drehmomenteinwirkung zu messen.

Insbesondere kann ganz allgemein vorteilhaft vorgesehen sein, dass an jedem von zwei Verbindungsstegen, die mit einem der Befestigungsblöcke unmittelbar verbunden sind, wenigstens ein Verformungsmesssensor, insbesondere ein Dehnungsmessstreifen, befestigt ist.

Außerdem kann das Drehmomentübertragungsbauteil durch die Parallelschaltung der Verbindungsstege trotz kompakter Bauweise, insbesondere trotz axial kompakter Bauweise, eine sehr hohe Torsionssteifigkeit aufweisen. Dies ist beispielsweise von besonderer Bedeutung für den Winkelfehler eines Getriebes, insbesondere Spannungswellengetriebes, zwischen einem Getriebeantrieb, insbesondere einer Getriebeantriebswelle, und Getriebeabtrieb, insbesondere einer Getriebeabtriebswelle. Der Winkelfehler eines Getriebes sollte, je nach Anwendung, nicht zu groß werden.

Von ganz besonderem Vorteil ist eine Getriebesensorvorrichtung, die ein erfindungsgemäßes Drehmomentübertragungsbauteil sowie eine elektronische Auswertevorrichung aufweist, die dazu ausgebildet und eingerichtet ist, Messsignale von dem wenigstens einen Verformungsmesssensor zu empfangen und daraus ein Drehmoment und/oder eine Drehzahl einer Getriebewelle und/oder eine Drehstellung einer Getriebewelle und/oder eine Drehrichtung einer Getriebewelle zu ermitteln. Die Getriebesensorvorrichtung kann beispielsweise bei einem Spannungswellengetriebe dazu genutzt werden, die Drehzahl einer Getriebewelle und/oder eine Drehstellung einer Getriebewelle und/oder eine Drehrichtung einer Getriebewelle zu ermitteln, indem alternativ oder zusätzlich zu den Verformungen der Verbindungsstege, die durch das Übertragene Drehmoment verursacht sind, eine durch die Form des Wellengenerators verursachte, insbesondere radiale, Verformung wenigstens eines der Getriebebauteilelemente erfasst wird.

Von ganz besonderem Vorteil ist ein Getriebe, das ein erstes Getriebebauteilelement und ein zweites Getriebebauteilelement aufweist, die mittels eines erfindungsgemäßen Drehmomentübertragungsbauteils drehmomentübertragend miteinander verbunden sind. Hierbei sind vorzugsweise die ersten Befestigungsblöcke mit dem ersten Getriebebauteilelement fest verbunden, während die zweiten Befestigungsblöcke mit dem zweiten Getriebebauteilelement fest verbunden sind. Insbesondere können die ersten Befestigungsblöcke an dem ersten Getriebebauteilelement befestigt sein, während die zweiten Befestigungsblöcke an dem zweiten Getriebebauteilelement befestigt sind. Es ist jedoch auch möglich, dass die ersten Befestigungsblöcke mit dem ersten Getriebebauteilelement gemeinsam einstückig hergestellt sind oder dass die zweiten Befestigungsblöcke mit dem zweiten Getriebebauteilelement gemeinsam einstückig hergestellt sind.

Bei einer vorteilhaften Ausführung sind die ersten Befestigungsblöcke von dem zweiten Getriebebauteilelement, insbesondere axial, beabstandet und sind die zweiten Befestigungsblöcke von dem ersten Getriebebauteilelement, insbesondere axial, beabstandet. Auf diese Weise wird insbesondere vermieden, dass die ersten Befestigungsblöcke an dem zweiten Getriebebauteilelement und die zweiten Befestigungsblöcke an dem ersten Getriebebauteilelement bei einer Veränderung des zu übertragenden Drehmomentes schleifen, was insbesondere zu einer Verfälschung einer Drehmomentmessung führen könnte.

Das Getriebe kann vorteilhaft eine elektronische Auswertevorrichtung aufweisen, die dazu ausgebildet und eingerichtet ist, Messsignale von dem wenigstens einen Verformungsmesssensor zu empfangen und daraus ein Drehmoment und/oder eine Drehzahl einer Getriebewelle und/oder eine Drehstellung einer Getriebewelle und/oder eine Drehrichtung einer Getriebewelle zu ermitteln.

Das Getriebe kann insbesondere ein Spannungswellengetriebe sein oder ein Spannungswellengetriebe beinhalten. Das Getriebe kann alternativ beispielsweise als Planetengetriebe oder als Zykloidgetriebe ausgebildet sein. In ganz besonders vorteilhafter Weise kann das Getriebe als ein Dreiwellengetriebe ausgebildet sein, bei dem eine rotierbar gelagerte erste Welle als Getriebeantrieb fungiert, eine rotierbar gelagerte zweite Welle als Getriebeabtrieb fungiert und eine dritte Welle, insbesondere relativ zu dem Getriebegehäuse, drehfest gehalten ist.

Hinsichtlich der Ausgestaltung und Funktion der Getriebebauteilelemente gibt es keine grundsätzlichen Beschränkungen. Beispielsweise kann wenigstens eines der Getriebebauteilelemente des Getriebes ein Getriebegehäuse oder ein mit einem Getriebegehäuse drehfest verbundener Flansch sein. Es ist auch möglich, dass eines der Getriebebauteilelemente Teil eines Lagers ist, insbesondere dass eines der Getriebebauteilelemente ein Innenring oder ein Außenring eines Wälzlagers ist.

Bei einer vorteilhaften Ausführung ist eines der Getriebebauteilelemente ein mit einer Getriebewelle drehfest verbundener Flansch. Die Getriebewelle, mit der der Flansch verbunden ist, kann ein Flexspline oder ein Circularspline oder ein Dynamicspline oder ein Wellengeneratoreinsatz eines Spannungswellengetriebes sein.

Beispielsweise kann eines der Getriebebauteilelemente eine Getriebewelle, insbesondere ein Flexspline oder ein Circularspline oder ein Dynamicspline oder ein Wellengeneratoreinsatz eines Spannungswellengetriebes, sein. Es ist ganz allgemein auch möglich, dass eines der Getriebebauteilelemente ein Zahnrad, insbesondere ein innenverzahntes Hohlrad, ist.

Ganz besonders vorteilhaft ist ein Aktuator, der einen Antriebsmotor und ein erfindungsgemäßes Getriebe, das dem Antriebsmotor triebtechnisch nachgeschaltet ist, aufweist. Es kann vorgesehen sein, dass die Auswertevorrichtung den Antriebsmotor in Abhängigkeit von den Messsignalen steuert oder regelt. Alternativ kann der Aktuator eine Steuerungsvorrichtung aufweisen, die Signale von der Auswertevorrichtung empfängt und die den Antriebsmotor in Abhängigkeit von den Messsignalen steuert oder regelt. Insbesondere ist es so beispielsweise ermöglicht, eine vorgegebene oder vorgebbare Drehstellung einer Getriebewelle, beispielsweise eines Wellengenerators oder eines Flexsplines (wenn das Getriebe als Spannungswellengetriebe ausgebildet ist), einzustellen. Es ist so beispielsweise auch möglich, die Drehzahl einer Getriebewelle auf einen vorgegebenen oder vorgebbaren Drehzahlwert zu regeln. Es ist so beispielsweise auch möglich, die Drehrichtung einer Getriebewelle auf eine vorgegebene oder vorgebbare Drehrichtung einzustellen.

Von ganz besonderem Vorteil ist ein Roboter, insbesondere ein Industrieroboter, der wenigstens ein erfindungsgemäßes Getriebe oder einen erfindungsgemäßen Aktuator beinhaltet. Insbesondere kann das erfindungsgemäße Getriebe in einem Robotergelenk eingesetzt werden. Das Robotergelenk kann durch die Verwendung des erfindungsgemäßen Getriebes besonders kompakt ausgebildet und insbesondere hinsichtlich eines übertragenen Drehmomentes zuverlässig überwacht werden.

Von ganz besonderem Vorteil ist ein Fahrwerk, insbesondere ein aktives Fahrwerk, für ein Kraftfahrzeug, das wenigstens ein erfindungsgemäßes Getriebe oder einen erfindungsgemäßen Aktuator aufweist. Ein ganz besonderer Vorteil ist es hierbei, dass das Fahrwerk kompakt ausbildbar ist und eine zuverlässige Überwachung des Getriebes insbesondere hinsichtlich eines übertragenen Drehmomentes einfach realisierbar ist, was die Fahrsicherheit erhöht. Von ganz besonderem Vorteil ist eine Lenkung, insbesondere PKW-Lenkung oder LKW-Lenkung, die wenigstens ein erfindungsgemäßes Getriebe aufweist. Die Lenkung kann insbesondere eine Servolenkung und/oder eine Überlagerungslenkung sein.

Ganz allgemein ist eine Vorrichtung, insb. ein Getriebe, bzw. ein Verfahren besonders vorteilhaft, das (insbesondere auch in Kombination mit wenigstens einem der vorstehend genannten Aspekte) wenigstens einen der folgenden Aspekte aufweist:
1. Drehmomentübertragungsbauteil (1) für ein Getriebe, zum drehmomentübertragenden Verbinden eines ersten Getriebebauteilelements (2) des Getriebes mit einem zweiten Getriebebauteilelement (3) des Getriebes, dadurch gekennzeichnet, dass das Drehmomentübertragungsbauteil (1) ringförmig oder ringsegmentförmig ausgebildet ist und mehrere in Umfangsrichtung angeordnete und voneinander beabstandete Befestigungsblöcke (4) aufweist, wobei jeweils unmittelbar benachbarte Befestigungsblöcke (4) mittels jeweils eines Verbindungsstegs (5) miteinander verbunden sind.
2. Drehmomentübertragungsbauteil (1) nach Aspekt 1, dadurch gekennzeichnet, dass jeder Befestigungsblock (4) wenigstens ein Befestigungsmittel aufweist.
3. Drehmomentübertragungsbauteil (1) nach Aspekt 2, dadurch gekennzeichnet, dass das Befestigungsmittel wenigstens eines der folgenden Merkmale aufweist:
   a. eine, insbesondere in Axialrichtung verlaufende, Durchgangsbohrung für eine Befestigungsschraube oder für einen Steckbolzen,
   b. eine, insbesondere in Axialrichtung verlaufende, Gewindebohrung (6).
4. Drehmomentübertragungsbauteil (1) nach einem der Aspekte 1 bis 3, dadurch gekennzeichnet, dass die Befestigungsblöcke (4) erste Befestigungsblöcke (7) beinhalten, die dazu ausgebildet sind, an dem ersten Getriebebauteilelement (2) befestigt zu werden, und dass die Befestigungsblöcke (4) zweite Befestigungsblöcke (8) beinhalten, die dazu ausgebildet sind, an dem zweiten Getriebebauteilelement (3) befestigt zu werden.
5. Drehmomentübertragungsbauteil (1) nach einem der Aspekte 1 bis 4, dadurch gekennzeichnet, dass jeder Befestigungsblock (4) eine ebene Anlagefläche aufweist.
6. Drehmomentübertragungsbauteil (1) nach Aspekt 4 und 5, dadurch gekennzeichnet, dass die Anlageflächen der ersten Befestigungsblöcke (7) in einer gemeinsamen ersten Ebene angeordnet sind und dass die Anlageflächen der zweiten Befestigungsblöcke (8) in einer gemeinsamen zweiten Ebene angeordnet sind, die von der ersten Ebene axial beabstandet ist.
7. Drehmomentübertragungsbauteil (1) nach einem der Aspekte 4 bis 6, dadurch gekennzeichnet, dass die Flächennormalen der Anlageflächen der ersten Befestigungsblöcke (7) axial entgegengesetzt zu den Flächennormalen der Anlageflächen der zweiten Befestigungsblöcke (8) ausgerichtet sind.
8. Drehmomentübertragungsbauteil (1) nach einem der Aspekte 4 bis 7, dadurch gekennzeichnet, dass die ersten Befestigungsblöcke (7) und die zweiten Befestigungsblöcke (8) in Umfangsrichtung abwechselnd angeordnet sind.
9. Drehmomentübertragungsbauteil (1) nach einem der Aspekte 4 bis 8, dadurch gekennzeichnet, dass die ersten Befestigungsblöcke (7) und die zweiten Befestigungsblöcke (8) axial versetzt zueinander angeordnet sind.
10. Drehmomentübertragungsbauteil (1) nach einem der Aspekte 1 bis 9, dadurch gekennzeichnet, dass die Befestigungsblöcke (4) und die Verbindungsstege (5) gemeinsam einstückig hergestellt sind.
11. Drehmomentübertragungsbauteil (1) nach einem der Aspekte 1 bis 10, dadurch gekennzeichnet, dass
   a. die Befestigungsblöcke (4) gleich ausgebildet sind, oder dass
   b. die Befestigungsblöcke (4) wenigstens hinsichtlich Form und Größe gleich ausgebildet sind, oder dass
   c. die ersten Befestigungsblöcke (4) gleich ausgebildet sind, oder dass
   d. die ersten Befestigungsblöcke (4) wenigstens hinsichtlich Form und Größe gleich ausgebildet sind, oder dass
   e. die zweiten Befestigungsblöcke (4) gleich ausgebildet sind, oder dass
   f. die zweiten Befestigungsblöcke (4) wenigstens hinsichtlich Form und Größe gleich ausgebildet sind.
12. Drehmomentübertragungsbauteil (1) nach einem der Aspekte 1 bis 11, dadurch gekennzeichnet, dass die Verbindungsstege (5) gleich ausgebildet sind.
13. Drehmomentübertragungsbauteil (1) nach einem der Aspekte 1 bis 12, dadurch gekennzeichnet, dass jeder Verbindungsteg (5) als Stab oder als Ringsegment ausgebildet ist.
14. Drehmomentübertragungsbauteil (1) nach einem der Aspekte 1 bis 13, dadurch gekennzeichnet, dass jeder Verbindungssteg (5) in Umfangsrichtung eine Länge aufweist, die größer ist als seine radiale Dicke und/oder seine axiale Dicke.
15. Drehmomentübertragungsbauteil (1) nach einem der Aspekte 1 bis 14, dadurch gekennzeichnet, dass die Verbindungsstege (5) derart ausgebildet und relativ zu den Befestigungsblöcken (4) derart angeordnet sind, dass jeweils von zwei Verbindungsstegen (5), die mit einem der Befestigungsblöcke (4) unmittelbar verbunden sind, einer ausschließlich auf Zug und der andere ausschließlich auf Druck belastet wird.
16. Drehmomentübertragungsbauteil (1) nach einem der Aspekte 1 bis 15, dadurch gekennzeichnet, dass an wenigstens einem der Verbindungstege (5) wenigstens ein Verformungsmesssensor (9), insbesondere ein Dehnungsmessstreifen (10), befestigt ist.
17. Drehmomentübertragungsbauteil (1) nach Aspekt 16, dadurch gekennzeichnet, dass an jedem von zwei Verbindungsstegen (5), die mit einem der Befestigungsblöcke (4) unmittelbar verbunden sind, wenigstens ein Verformungsmesssensor (9), insbesondere ein Dehnungsmessstreifen (10), befestigt ist.
18. Getriebesensorvorrichtung, die ein Drehmomentübertragungsbauteil (1) nach Aspekt 16 oder 17 sowie eine elektronische Auswertevorrichtung aufweist, die dazu ausgebildet und eingerichtet ist, Messsignale von dem wenigstens einen Verformungsmesssensor (9) zu empfangen und daraus ein Drehmoment und/oder eine Drehzahl einer Getriebewelle und/oder eine Drehstellung einer Getriebewelle und/oder eine Drehrichtung einer Getriebewelle zu ermitteln.
19. Getriebe, das ein erstes Getriebebauteilelement (2) und ein zweites Getriebebauteilelement (3) aufweist, die mittels eines Drehmomentübertragungsbauteils (1) nach einem der Aspekte 1 bis 17 drehmomentübertragend miteinander verbunden sind.
20. Getriebe nach Aspekt 19, dadurch gekennzeichnet, dass die ersten Befestigungsblöcke (7) mit dem ersten Getriebebauteilelement (2) fest verbunden sind und dass die zweiten Befestigungsblöcke (8) mit dem zweiten Getriebebauteilelement (3) fest verbunden sind.
21. Getriebe nach Aspekt 19 oder20, dadurch gekennzeichnet, dass die ersten Befestigungsblöcke (7) mit dem ersten Getriebebauteilelement (2) gemeinsam einstückig hergestellt sind oder dass die zweiten Befestigungsblöcke (8) mit dem zweiten Getriebebauteilelement (3) gemeinsam einstückig hergestellt sind.
22. Getriebe nach einem der Aspekte 19 bis 21, dadurch gekennzeichnet, dass die ersten Befestigungsblöcke (7) von dem zweiten Getriebebauteilelement (3), insbesondere axial, beabstandet sind und dass die zweiten Befestigungsblöcke (8) von dem ersten Getriebebauteilelement (2), insbesondere axial, beabstandet sind.
23. Getriebe nach einem der Aspekte 19 bis 22, gekennzeichnet durch eine elektronische Auswertevorrichtung, die dazu ausgebildet und eingerichtet ist, Messsignale von dem wenigstens einen Verformungsmesssensor (9) zu empfangen und daraus ein Drehmoment und/oder eine Drehzahl einer Getriebewelle und/oder eine Drehstellung einer Getriebewelle und/oder eine Drehrichtung einer Getriebewelle zu ermitteln.
24. Getriebe nach einem der Aspekte 19 bis 23, dadurch gekennzeichnet, dass das Getriebe ein Spannungswellengetriebe ist oder ein Spannungswellengetriebe beinhaltet.
25. Getriebe nach einem der Aspekte 19 bis 24, dadurch gekennzeichnet, dass
   a. eines der Getriebebauteilelemente (2, 3) ein Getriebegehäuse oder ein mit einem Getriebegehäuse drehfest verbundener Flansch ist, oder dass
   b. eines der Getriebebauteilelemente (2, 3) Teil eines Lagers ist, oder dass
   c. eines der Getriebebauteilelemente (2, 3) ein Innenring oder ein Außenring eines Wälzlagers ist, oder dass
   d. eines der Getriebebauteilelemente (2, 3) ein mit einer Getriebewelle drehfest verbundener Flansch ist, oder dass
   e. eines der Getriebebauteilelemente (2, 3) eine Getriebewelle, insbesondere ein Flexspline oder ein Circularspline oder ein Dynamicspline oder ein Wellengeneratoreinsatz eines Spannungswellengetriebes, ist, oder dass
   f. eines der Getriebebauteilelemente (2, 3) ein Zahnrad, insbesondere ein innenverzahntes Hohlrad, ist.
26. Aktuator beinhaltend einen Antriebsmotor und ein Getriebe nach einem der Aspekte 19 bis 25, das dem Antriebsmotor triebtechnisch nachgeschaltet ist.
27. Aktuator nach Aspekt 26, dadurch gekennzeichnet, dass
   a. die Auswertevorrichtung (24) den Antriebsmotor in Abhängigkeit von den Messsignalen steuert oder regelt, oder dass
   b. eine Steuerungsvorrichtung, die Signale von der Auswertevorrichtung (24) empfängt, den Antriebsmotor in Abhängigkeit von den Messsignalen steuert oder regelt.
28. Robotergelenk, welches wenigstens ein Getriebe nach einem der Aspekte 19 bis 25 und/oder einen Aktuator nach Aspekt 26 oder 27 aufweist.
29. Roboter, der wenigstens ein Getriebe nach einem der Aspekte 19 bis 25 und/oder einen Aktuator nach Aspekt 26 oder 27 aufweist.
30. Fahrwerk, insbesondere aktives Fahrwerk, für ein Kraftfahrzeug, welches wenigstens ein Getriebe nach einem der Aspekte 19 bis 25 und/oder einen Aktuator nach Aspekt 26 oder 27 aufweist.
31. Lenkung, insbesondere PKW-Lenkung oder LKW-Lenkung, die wenigstens ein Getriebe nach einem der Aspekte 19 bis 25 und/oder einen Aktuator nach Aspekt 26 oder 27 aufweist.
32. Lenkung nach Aspekt 31, dadurch gekennzeichnet, dass die Lenkung eine Servolenkung und/oder eine Überlagerungslenkung ist.
33. Verwendung eines Drehmomentübertragungsbauteils (1) nach einem der Aspekte 1 bis 17 oder einer Getriebesensorvorrichtung nach Aspekt 18 bei einer Drehmomentmessung.

In der Zeichnung ist der Erfindungsgegenstand beispielhaft und schematisch dargestellt und wird anhand der Figuren nachfolgend beschrieben, wobei gleiche oder gleich wirkende Elemente auch in unterschiedlichen Ausführungsbeispielen zumeist mit denselben Bezugszeichen versehen sind. Dabei zeigen:
- Fig. 1: eine perspektivische Detailansicht eines Ausführungsbeispiels eines erfindungsgemäßen Drehmomentübertragungsbauteils,
- Fig.2: eine schematische Querschnittsdarstellung eines Ausführungsbeispiels eines erfindungsgemäßen Getriebes,
- Fig.3: eine Detailansicht eines weiteren Ausführungsbeispiels eines erfindungsgemäßen Drehmomentübertragungsbauteils in einer Querschnittsdarstellung, und
- Fig.4: Ersatzschaltbilder eines Detailausschnitts des weiteren Ausführungsbeispiels eines erfindungsgemäßen Drehmomentübertragungsbauteils.

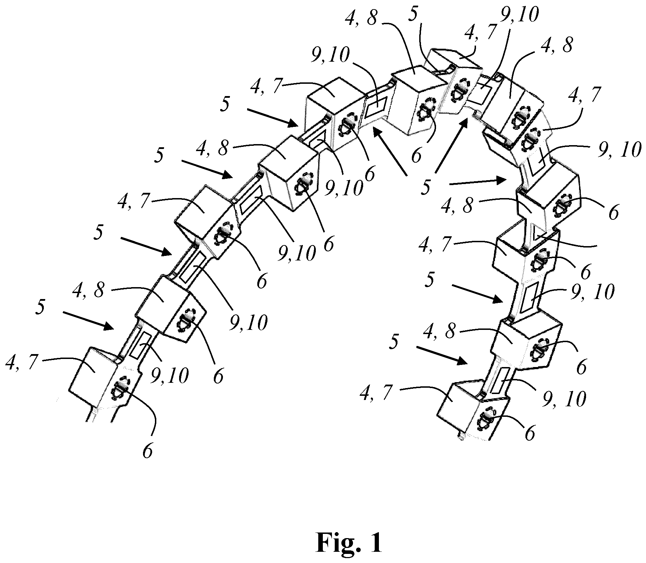

Fig. 1 zeigt eine perspektivische Detailansicht eines Ausführungsbeispiels eines erfindungsgemäßen Drehmomentübertragungsbauteils 1 für ein Getriebe, zum drehmomentübertragenden Verbinden eines ersten Getriebebauteilelements 2 des Getriebes mit einem zweiten Getriebebauteilelement 3 des Getriebes.

Das Drehmomentübertragungsbauteil 1 ist ringförmig ausgebildet ist und weist mehrere in Umfangsrichtung angeordnete und voneinander beabstandete Befestigungsblöcke 4 auf, wobei jeweils unmittelbar benachbarte Befestigungsblöcke 4 mittels jeweils eines Verbindungsstegs 5 miteinander verbunden sind.

Jeder Befestigungsblock 4 weist wenigstens ein Befestigungsmittel in Form einer Gewindebohrung 6 für eine (nicht dargestellte) Befestigungsschraube auf.

Die Befestigungsblöcke 4 beinhalten erste Befestigungsblöcke 7, die dazu ausgebildet sind, an dem (in dieser Figur nicht dargestellten) ersten Getriebebauteilelement 2 befestigt zu werden. Die Befestigungsblöcke 4 beinhalten außerdem zweite Befestigungsblöcke 8, die dazu ausgebildet sind, an dem (in dieser Figur nicht dargestellten) zweiten Getriebebauteilelement 3 befestigt zu werden. Die ersten Befestigungsblöcke 7 und die zweiten Befestigungsblöcke 8 sind axial versetzt zueinander angeordnet.

An den Verbindungstegen 5 sind Verformungsmesssensoren 9 in Form von Dehnungsmessstreifen 10 befestigt. Die Verformungsmesssensoren ermöglichen es, eine von der jeweils einwirkenden Kraft abhängige Verformung, insbesondere Längung oder Stauchung, des jeweiligen Verbindungstegs zu erfassen.

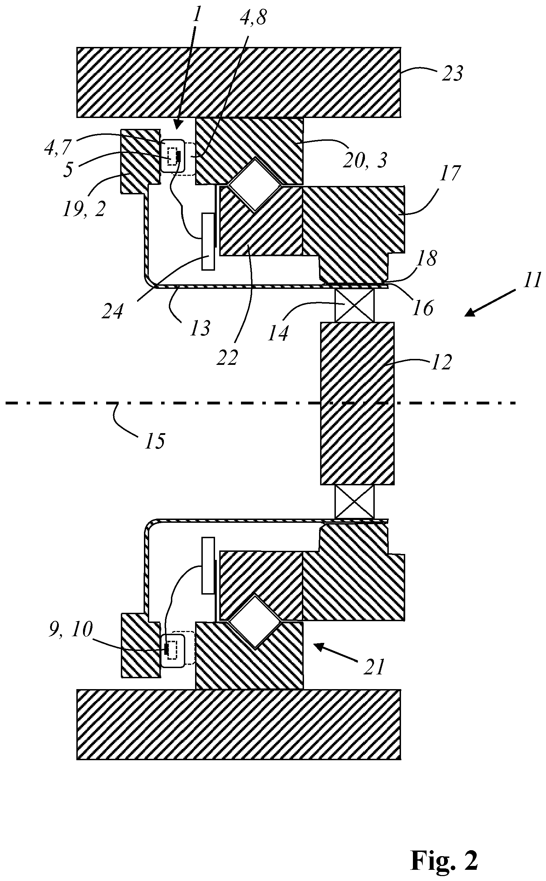

Fig. 2 zeigt eine schematische Querschnittsdarstellung eines Ausführungsbeispiels eines erfindungsgemäßen Getriebes, das als Spannungswellengetriebe ausgebildet ist.

Das Spannungswellengetriebe hat einen Wellengenerator 11 mit einem ovalen Wellengeneratoreinsatz 12, der relativ zu einem Flexspline 13 mittels eines radialflexiblen Wälzlagers 14 um eine Rotationsachse 15 rotierbar gelagert ist. Der Flexspline 13 hat eine Außenverzahnung 16. Das Spannungswellengetriebe weist außerdem einen Circularspline 17 auf, der eine Innenverzahnung 18 hat. Die Innenverzahnung 18 des Circularsplines 17 steht mit der Außenverzahnung 16 des Flexsplines 13 an zwei gegenüberliegenden Stellen in Eingriff.

An der Krempe des hutförmig ausgebildeten Flexsplines 13 ist ein Flansch 19 angeordnet, der ein erstes Getriebebauteilelement 2 im Sinne der vorliegenden Erfindung ist und der mittels eines erfindungsgemäßen Drehmomentübertragungsbauteils 1 mit dem Außenring 20 eines Kreuzrollenlagers 21 elastisch beweglich verbunden ist. Der Außenring 20 ist ein zweites Getriebebauteilelement 3 im Sinne der vorliegenden Erfindung. Ein Innenring 22 des Kreuzrollenlagers 21 ist drehfest und starr mit dem Circularspline 17 drehfest verbunden. Der Außenring 20 des Kreuzrollenlagers 21 ist drehfest und starr mit einen Getriebegehäuse 23 verbunden.

Beispielsweise können der Wellengeneratoreinsatz 12 als Getriebeantrieb und der Circularspline 17 als Getriebeabtrieb fungieren, während der über den Flansch 19, das Drehmomentübertragungsbauteil 1 und den Außenring 20 an dem Getriebegehäuse 23 befestigte Flexspline 13 als festgehaltene Welle fungiert.

Das Drehmomentübertragungsbauteil 1 ist ringförmig ausgebildet ist und weist mehrere in Umfangsrichtung angeordnete und voneinander beabstandete Befestigungsblöcke 4 auf, wobei jeweils unmittelbar benachbarte Befestigungsblöcke 4 mittels jeweils eines Verbindungsstegs 5 miteinander verbunden sind.

Die Befestigungsblöcke 4 beinhalten erste Befestigungsblöcke 7, die an dem ersten Getriebebauteilelement 2 (Flansch 19 des Flexsplines 13) befestigt sind. Die Befestigungsblöcke 4 beinhalten außerdem zweite Befestigungsblöcke 8 (schematisch gestrichelt eingezeichnet), die an dem zweiten Getriebebauteilelement 3, nämlich dem Außenring 20, befestigt sind. Die ersten Befestigungsblöcke 7 und die zweiten Befestigungsblöcke 8 sind axial versetzt zueinander angeordnet.

An den Verbindungstegen 5 sind Verformungsmesssensoren 9 in Form von Dehnungsmessstreifen 10 befestigt. Die Verformungsmesssensoren 9 ermöglichen es, eine von der jeweils einwirkenden Kraft abhängige Verformung, insbesondere Längung oder Stauchung, des jeweiligen Verbindungstegs 5 zu erfassen.

Das Spannungswellengetriebe weist außerdem eine Auswertevorrichtung 24 auf, an die die Dehnungsmessstreifen 10 angeschlossen sind und die Messsignale der Dehnungsmessstreifen 10 empfängt. Die Auswertevorrichtung errechnet aus den Messsignalen das über das Drehmomentübertragungsbauteil 1 übertragene Drehmoment. Die Auswertevorrichtung 24 weist eine ringförmige oder ringsegmentförmige Platine auf, die an dem Außenring 22 befestigt ist. Die Platine kann auch eine andere Form aufweisen.

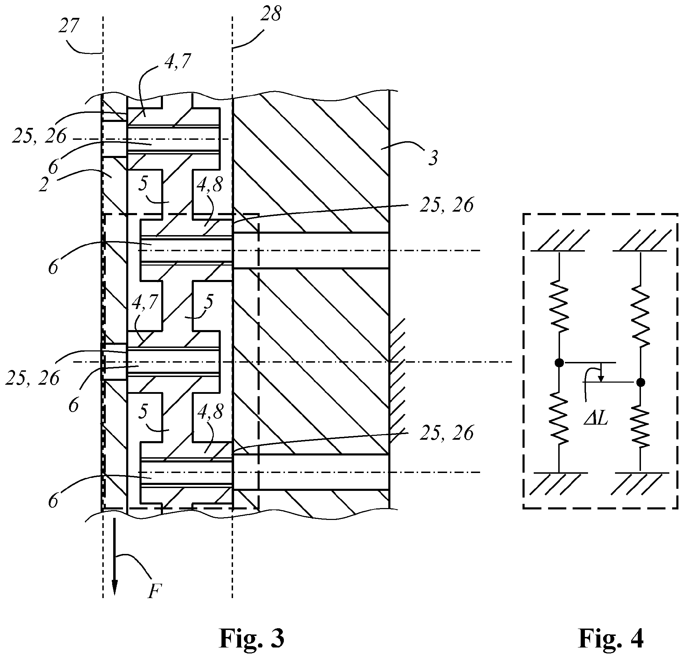

Fig. 3 zeigt eine Detailansicht eines weiteren Ausführungsbeispiels eines erfindungsgemäßen Drehmomentübertragungsbauteils 1, das ein erstes Getriebebauteilelement 2 und ein zweites Getriebebauteilelement 3 drehmomentübertragend verbindet, in einer Querschnittsdarstellung.

Das Drehmomentübertragungsbauteil 1 ist ringförmig ausgebildet ist und weist mehrere in Umfangsrichtung angeordnete und voneinander beabstandete Befestigungsblöcke 4 auf, wobei jeweils unmittelbar benachbarte Befestigungsblöcke 4 mittels jeweils eines Verbindungsstegs 5 miteinander verbunden sind. Jeder Befestigungsblock 4 weist ein Befestigungsmittel in Form einer Gewindebohrung 6 für eine (nicht dargestellte) Befestigungsschraube auf.

Die Befestigungsblöcke 4 beinhalten erste Befestigungsblöcke 7, die jeweils mittels einer nicht dargestellten Befestigungsschraube an dem ersten Getriebebauteilelement 2 befestigt sind. Die Befestigungsblöcke 4 beinhalten außerdem zweite Befestigungsblöcke 8, die jeweils mittels einer nicht dargestellten Befestigungsschraube an dem zweiten Getriebebauteilelement 3, nämlich dem Außenring 20, befestigt sind. Die ersten Befestigungsblöcke 7 und die zweiten Befestigungsblöcke 8 sind axial versetzt zueinander angeordnet.

Jeder Befestigungsblock 4 weist eine ebene Anlagefläche 25 auf, die dazu ausgebildet und angeordnet ist, an einer Gegenanlagefläche 26 eines Getriebebauteilelements 2, 3 anzuliegen. Die Anlageflächen 25 der ersten Befestigungsblöcke 7 sind in einer gemeinsamen ersten Ebene 27 angeordnet, während die Anlageflächen 25 der zweiten Befestigungsblöcke 8 in einer gemeinsamen zweiten Ebene 28 angeordnet sind, die von der ersten Ebene 27 axial beabstandet ist. Die Flächennormalen der Anlageflächen 25 der ersten Befestigungsblöcke 7 sind axial entgegengesetzt zu den Flächennormalen der Anlageflächen 25 der zweiten Befestigungsblöcke 8 ausgerichtet.

Fig. 4 zeigt Ersatzschaltbilder des in Figur 3 gestrichelt umrahmten Detailausschnitts des weiteren Ausführungsbeispiels eines erfindungsgemäßen Drehmomentübertragungsbauteils 1, wobei in dem linken Teil der Figur 4 der unbelastete Fall dargestellt ist, während der rechte Teil der Figur 4 die Situation illustriert, wenn ein Drehmoment übertragen wird.

Im unbelasteten Fall sind die Verbindungsstege 5, die als Zug- bzw. Druckfedern simuliert werden können, gleich lang. Wenn auf das erste Getriebebauteilelement 2 ein Drehmoment ausgeübt wird, während das zweite Getriebebauteilelement 3 festgehalten wird (angedeutet durch die parallelen Striche), wirkt in Umfangsrichtung eine Kraft F, die einen der beiden betrachteten Verbindungsstege 5 auf Zug belastet und um eine Länge L längt und die den anderen der beiden betrachteten Verbindungsstege 5 auf Druck belastet und um die Länge ΔL staucht. Die Figur 4 illustriert, dass die auf Druck belasteten Verbindungssteg 5 um dieselbe Länge ΔL gestaucht werden, wie die gleichzeitig auf Zug belasteten Verbindungsstege 5 gelängt werden.

### Bezugszeichenliste:

- 1: Drehmomentübertragungsbauteil
- 2: erstes Getriebebauteilelement
- 3: zweites Getriebebauteilelement
- 4: Befestigungsblock
- 5: Verbindungssteg
- 6: Gewindebohrung
- 7: erster Befestigungsblock
- 8: zweiter Befestigungsblock
- 9: Verformungsmesssensor
- 10: Dehnungsmessstreifen
- 11: Wellengenerator
- 12: Wellengeneratoreinsatz
- 13: Flexspline
- 14: radialflexibles Wälzlager
- 15: Rotationsachse
- 16: Außenverzahnung
- 17: Circularspline
- 18: Innenverzahnung
- 19: Flansch
- 20: Außenring
- 21: Kreuzrollenlager
- 22: Außenring
- 23: Getriebegehäuse
- 24: Auswertevorrichtung
- 25: Anlagefläche
- 26: Gegenanlagefläche
- 27: erste Ebene
- 28: zweite Ebene
- F: Kraft
- ΔL: Länge

## Patentansprüche

1. Drehmomentübertragungsbauteil (1) für ein Getriebe, zum drehmomentübertragenden Verbinden eines ersten Getriebebauteilelements (2) des Getriebes mit einem zweiten Getriebebauteilelement (3) des Getriebes, wobei das Drehmomentübertragungsbauteil (1) ringförmig oder ringsegmentförmig ausgebildet ist und mehrere in Umfangsrichtung angeordnete und voneinander beabstandete Befestigungsblöcke (4) aufweist, und wobei jeweils unmittelbar benachbarte Befestigungsblöcke (4) mittels jeweils eines Verbindungsstegs (5) miteinander verbunden sind, **dadurch gekennzeichnet, dass** an wenigstens einem der Verbindungstege (5) wenigstens ein Verformungsmesssensor (9), insbesondere ein Dehnungsmessstreifen (10), befestigt ist.

2. Drehmomentübertragungsbauteil (1) nach Anspruch 1, **dadurch gekennzeichnet, dass** die Befestigungsblöcke (4) erste Befestigungsblöcke (7) beinhalten, die dazu ausgebildet sind, an dem ersten Getriebebauteilelement (2) befestigt zu werden, und dass die Befestigungsblöcke (4) zweite Befestigungsblöcke (8) beinhalten, die dazu ausgebildet sind, an dem zweiten Getriebebauteilelement (3) befestigt zu werden.

3. Drehmomentübertragungsbauteil (1) nach Anspruch 2, **dadurch gekennzeichnet, dass** die Befestigungsblöcke (4) jeweils eine, insbesondere ebene, Anlagefläche aufweisen, wobei die Anlageflächen der ersten Befestigungsblöcke (7) in einer gemeinsamen ersten Ebene angeordnet sind und dass die Anlageflächen der zweiten Befestigungsblöcke (8) in einer gemeinsamen zweiten Ebene angeordnet sind, die von der ersten Ebene axial beabstandet ist.

4. Drehmomentübertragungsbauteil (1) nach Anspruch 2 oder 3, **dadurch gekennzeichnet, dass**
a. die ersten Befestigungsblöcke (7) und die zweiten Befestigungsblöcke (8) in Umfangsrichtung abwechselnd angeordnet sind, und/oder dass
b. die ersten Befestigungsblöcke (7) und die zweiten Befestigungsblöcke (8) axial versetzt zueinander angeordnet sind.

5. Drehmomentübertragungsbauteil (1) nach einem der Ansprüche 1 bis 4, **dadurch gekennzeichnet, dass** an jedem von zwei Verbindungsstegen (5), die mit einem der Befestigungsblöcke (4) unmittelbar verbunden sind, wenigstens ein Verformungsmesssensor (9), insbesondere ein Dehnungsmessstreifen (10), befestigt ist.

6. Drehmomentübertragungsbauteil (1) nach einem der Ansprüche 1 bis 5, **dadurch gekennzeichnet, dass** der wenigstens eine Verformungsmesssensor (9) dazu ausgebildet und angeordnet ist, insbesondere unmittelbar, eine in Umfangsrichtung auf den Verbindungssteg (5) wirkende Kraft zu messen.

7. Getriebesensorvorrichtung, die ein Drehmomentübertragungsbauteil (1) nach einem der Ansprüche 1 bis 6 sowie eine elektronische Auswertevorrichtung aufweist, die dazu ausgebildet und eingerichtet ist, Messsignale von dem wenigstens einen Verformungsmesssensor (9) zu empfangen und daraus ein Drehmoment und/oder eine Drehzahl einer Getriebewelle und/oder eine Drehstellung einer Getriebewelle und/oder eine Drehrichtung einer Getriebewelle zu ermitteln.

8. Getriebe, das ein erstes Getriebebauteilelement (2) und ein zweites Getriebebauteilelement (3) aufweist, die mittels eines Drehmomentübertragungsbauteils (1) nach einem der Ansprüche 1 bis 6 drehmomentübertragend miteinander verbunden sind.

9. Getriebe nach Anspruch 8, **dadurch gekennzeichnet, dass** das Getriebe wenigstens eines der folgenden Merkmale a bis c aufweist:
a. die ersten Befestigungsblöcke (7) sind mit dem ersten Getriebebauteilelement (2) fest verbunden und die zweiten Befestigungsblöcke (8) sind mit dem zweiten Getriebebauteilelement (3) fest verbunden,
b. die ersten Befestigungsblöcke (7) sind mit dem ersten Getriebebauteilelement (2) gemeinsam einstückig hergestellt oder die zweiten Befestigungsblöcke (8) sind mit dem zweiten Getriebebauteilelement (3) gemeinsam einstückig hergestellt,
c. die ersten Befestigungsblöcke (7) sind von dem zweiten Getriebebauteilelement (3), insbesondere axial, beabstandet und die zweiten Befestigungsblöcke (8) sind von dem ersten Getriebebauteilelement (2), insbesondere axial, beabstandet.

10. Getriebe nach Anspruch 8 oder 9, **gekennzeichnet durch** eine elektronische Auswertevorrichtung, die dazu ausgebildet und eingerichtet ist, Messsignale von dem wenigstens einen Verformungsmesssensor (9) zu empfangen und daraus ein Drehmoment und/oder eine Drehzahl einer Getriebewelle und/oder eine Drehstellung einer Getriebewelle und/oder eine Drehrichtung einer Getriebewelle zu ermitteln.

11. Getriebe nach einem der Ansprüche 8 bis 10, **dadurch gekennzeichnet, dass**
a. eines der Getriebebauteilelemente (2, 3) ein Getriebegehäuse oder ein mit einem Getriebegehäuse drehfest verbundener Flansch ist, oder dass
b. eines der Getriebebauteilelemente (2,3) Teil eines Lagers ist, oder dass
c. eines der Getriebebauteilelemente (2, 3) ein Innenring oder ein Außenring eines Wälzlagers ist, oder dass
d. eines der Getriebebauteilelemente (2, 3) ein mit einer Getriebewelle drehfest verbundener Flansch ist, oder dass
e. eines der Getriebebauteilelemente (2, 3) eine Getriebewelle, insbesondere ein Flexspline oder ein Circularspline oder ein Dynamicspline oder ein Wellengeneratoreinsatz eines Spannungswellengetriebes, ist, oder dass
f. eines der Getriebebauteilelemente (2, 3) ein Zahnrad, insbesondere ein innenverzahntes Hohlrad, ist.

12. Aktuator beinhaltend einen Antriebsmotor und ein Getriebe nach einem der Ansprüche 8 bis 11, das dem Antriebsmotor triebtechnisch nachgeschaltet ist, vorzugsweise mit einer die Auswertevorrichtung (24) den Antriebsmotor in Abhängigkeit von den Messsignalen steuert oder regelt oder mit einer eine Steuerungsvorrichtung, die Signale von der Auswertevorrichtung (24) empfängt, den Antriebsmotor in Abhängigkeit von den Messsignalen steuert oder regelt.

13. Robotergelenk, welches wenigstens ein Getriebe nach einem der Ansprüche 8 bis 11 und/oder einen Aktuator nach Anspruch 12 aufweist, oder Roboter, der wenigstens ein Getriebe nach einem der Ansprüche 8 bis 11 und/oder einen Aktuator nach Anspruch 12 aufweist.

14. Fahrzeugbaugruppe, insbesondere Fahrwerk oder aktives Fahrwerk oder Lenkung, für ein Kraftfahrzeug, die wenigstens ein Getriebe nach einem der Ansprüche 8 bis 11 und/oder einen Aktuator nach Anspruch 12 aufweist.

15. Verwendung eines Drehmomentübertragungsbauteils (1) nach einem der Ansprüche 1 bis 6 oder einer Getriebesensorvorrichtung nach Anspruch 7 bei einer Drehmomentmessung.
